# EUROPEAN PATENT SPECIFICATION

(11) **EP 2 679 296 B1**
(45) Date of publication and mention of the grant of the patent: **25.07.2018**
(21) Application number: 13173586.2
(22) Date of filing: 25.06.2013
(51) Int. Cl.: B01D 53/14

(54) **ACID GAS ABSORBENT COMPRISING DIAMINE, ACID GAS REMOVAL METHOD, AND ACID GAS REMOVAL DEVICE**
SÄUREGASABSORBENZ UMFASSEND EIN DIAMIN, SÄUREGASENTFERNUNGSVERFAHREN UND SÄUREGASENTFERNUNGSVORRICHTUNG
AGENT ABSORBANT DE GAZ ACIDE COMPRENANT UNE DIAMINE, PROCÉDÉ D'ÉLIMINATION DE GAZ ACIDE ET DISPOSITIF D'ÉLIMINATION DE GAZ ACIDE

(30) Priority: 25.06.2012 JP 2012142207
(43) Date of publication of application: 01.01.2014
(73) Proprietor: Kabushiki Kaisha Toshiba, Tokyo 105-8001 (JP)
(72) Inventor: Murai, Shinji, Minato-ku, Tokyo 105-8001 (JP); Maezawa, Yukishige, Minato-ku, Tokyo 105-8001 (JP); Kato, Yasuhiro, Minato-ku, Tokyo 105-8001 (JP); Muramatsu, Takehiko, Minato-ku, Tokyo 105-8001 (JP); Hodotsuka, Masatoshi, Minato-ku, Tokyo 105-8001 (JP); Saito, Satoshi, Minato-ku, Tokyo 105-8001 (JP)
(74) Representative: Moreland, David

(56) References cited:
- EP-A1- 0 080 817
- US-A- 4 112 050
- US-A- 4 217 238
- US-A1- 2008 159 937
- US-A1- 2010 108 610

## Description

### FIELD

Embodiments described herein relate generally to an acid gas absorbent, and an acid gas removal device, and an acid gas removal method using the acid gas absorbent.

### BACKGROUND

In recent years, a greenhouse effect resulting from an increase of a carbon dioxide (CO₂) concentration has been pointed out as a cause of global warming phenomena, and there is an urgent need to devise an international countermeasure to protect environment in a global scale. Industrial activities have a large responsibility as a generation source of CO₂, and there is a trend to suppress discharge of CO₂.

As technologies to suppress the increase of the concentration of acid gas, typically, CO₂, there are a development of energy saving products, a separation and recovery technology of discharged acid gas, technologies to use the acid gas as a resource and to isolate and store the acid gas, a switching to alternate energies such as natural energy, atomic energy, and so on which do not discharge the acid gas, and so on.

As separation technologies of the acid gas studied up to now, there are an absorption process, a suction process, a membrane separation process, a cryogenic process, and so on. Among them, the absorption process is suitable for processing a large amount of gas, and its application in a factory, a power station is considered.

Accordingly, a method in which exhaust gas generated when fossil fuel (coal, coal oil, natural gas, and so on) is burned is brought into contact with a chemical absorbent, whereby CO₂ in exhaust combustion gas is removed and recovered, and further a method storing the recovered CO₂ are performed throughout the world in a facility such as a thermal power station using the fossil fuel. Besides, to remove acid gas such as hydrogen sulfide (H₂S) in addition to CO₂ by using the chemical absorbent has been proposed.

In general, alkanolamines represented by monoethanolamine (MEA) have been developed from the 1930s as the chemical absorbent used in the absorption process, and they are still used at present. This method is economical and it is easy to increase the removal device in size.

As existing and widely used alkanolamines, there are monoethanolamine, 2-amino-2-methylpropanolamine, methylaminoethanol, ethylaminoethanol, propylaminoethanol, diethanolamine, bis(2-hydroxy-1-methylethyl)amine, methyldiethanolamine, dimethylethanolamine, diethylethanolamine, triethanolamine, dimethylamino-1-methylethanol, and so on.

In particular, methylethanolamine being secondary amine, diethylethanolamine being tertiary amine, and so on have been widely used because their reaction rates are fast. However, there are problems that these compounds have corrosiveness, are easily deteriorated, and require high energy for regeneration. On the other hand, methyldiethanolamine has low corrosiveness and requires low energy for regeneration, but has a defect that an absorption speed is low. Accordingly, a development of a new absorbent in which these points are improved is required.

In recent years, a study on particularly alkanolamine having structural steric hindrance, among amine based compounds, is vigorously tried as the absorbent of acid gas. Alkanolamine having the steric hindrance has merits that selectivity of acid gas is very high and the energy required for regeneration is small.

The reaction speed of the amine based compound having the steric hindrance depends on a degree of reaction hindrance determined by the steric structure thereof. The reaction speed of the amine based compound having the steric hindrance is lower than that of the secondary amine, for example, such as methylethanolamine and diethanolamine, but higher than that of the tertiary amine. Besides, 2-amino-2-methylpropanol, 2-piperidineethanol, and so on are known as alkanolamine that is to be compounded in the absorbent.

On the other hand, a method in which a cyclic amine being an amine based compound having a structure different from that of alkanolamines is used as the absorbent is also known.

US2010/0108610 A1 discloses a diamine absorbent containing heat stable salts.

US 4,217,238 discloses a process for removing acid gases with hindered amines and amino acids.

US 4,112,050 discloses a process for removing carbon dioxide containing acidic gases from gaseous mixtures using a basic salt activated with a hindered amine.

EP 0 080 817 discloses a process for removing acid gases using a basic salt activated with a non-sterically hindered diamino compound.

US 2008/0159937 A1 discloses a process for removing acid gas from a gas stream utilizing a low viscosity absorbent comprising a solution of at least one selected amine.

### BRIEF DESCRIPTION OF THE DRAWINGS

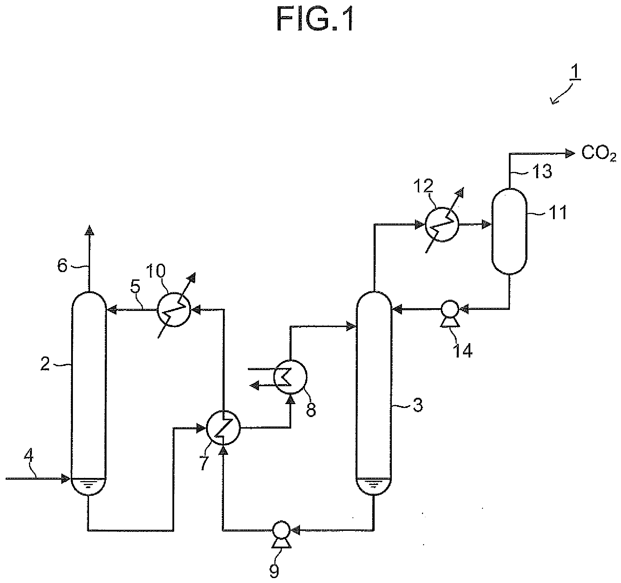

FIG. 1 is a schematic diagram of an acid gas removal device according to an embodiment.

### DETAILED DESCRIPTION

However, these technologies are still insufficient in terms of acid gas absorption capacities such as an absorption amount of acid gas, and further improvement of the gas absorption capacities is required.

A problem to be solved by the present invention is to provide an acid gas absorbent whose recovery amount of acid gas such as carbon dioxide is high, and which generates small heat of reaction when absorbing acid gas, and an acid gas removal device and an acid gas removal method using the acid gas absorbent.

An acid gas absorbent according to an embodiment comprises at least one type of diamine compound represented by the following general formula (1). Note that when it is said just as an "alkyl group" in the following description, it means a linear alkyl group which may have a side chain.

R¹R²N-(CHR³)ₙ-CH₂-NR⁴R⁵ ... (1)

where R¹ represents a cyclopentyl or 2-methylcyclopentyl group, R² represents a hydrogen atom, R⁴ and R⁵ represent any of: a cyclic alkyl group having carbon number from 3 to 6; an alkyl group having carbon number from 1 to 4; a hydroxyalkyl group; and a hydrogen atom,
R³ represents any of: a hydrogen atom; a methyl group, and an ethyl group, "n" represents an integer number of 1 or 2, one or two of R¹, R⁴ and R⁵ is the cyclic alkyl group having carbon number from 3 to 6, and one or two of R⁴ and R⁵ is the hydroxyalkyl group.

An acid gas removal method according to an embodiment comprises bringing gas containing acid gas into contact with the acid gas absorbent according to an embodiment to remove the acid gas from the gas containing the acid gas.

An acid gas removal device according to an embodiment is an acid gas removal device removing acid gas from gas containing the acid gas, the device comprising: an absorption tower containing the acid gas absorbent according to the above-stated embodiment, and bringing the gas containing the acid gas into contact with the acid gas absorbent to remove the acid gas from the gas; and a regeneration tower configured to contain the acid gas absorbent having the acid gas absorbed at the absorption tower so as to regenerate the acid gas absorbent to be reused at the absorption tower by removing the acid gas from the acid gas absorbent.

Hereinafter, embodiments of the present invention will be described in detail. An acid gas absorbent according to an embodiment is characterized in comprising at least one type of diamine compound represented by the following general formula (1).

R¹R²N-(CHR³)ₙ-CH₂-NR⁴R⁵ ... (1)

In the above formula (1), R¹ represents a cyclopentyl or 2-methylcyclopentyl group, R² represents a hydrogen atom, R⁴ and R⁵ represent any of a cyclic alkyl group whose carbon number is 3 to 6, an alkyl group whose carbon number is 1 to 4, a hydroxyalkyl group, and a hydrogen atom. R³ represents any of a hydrogen atom, a methyl group, or an ethyl group. "n" represents an integer number of 1 or 2. R¹, R², R⁴ and R⁵ may be different from one another. Besides, any of two of R¹, R², R⁴ and R⁵ may be the same. Note that at least one of R¹, R⁴ and R⁵ is the cyclic alkyl group whose carbon number is 3 to 6. Besides, at least one of R⁴ and R⁵ is the hydroxyalkyl group. In the above formula (1), at least one of two amino groups is a secondary amino group. In the above formula (1), both of the two amino groups are groups other than a primary amino group.

Conventionally, it has been known that a steric hindrance held by an amino compound has a large influence on a product at a carbon dioxide absorption time, and plays an advantageous role on generation of bicarbonate ion exhibiting low heat of reaction. For example, it is reported that N-isopropylaminoethanol having a branch structure exhibits low heat of reaction in an absorption reaction of carbon dioxide. Based on the above-stated information, the present inventor conducted studies to obtain a larger effect of the steric hindrance, and as a result, it has been found that an absorption amount of the acid gas is large and it is possible to obtain further lower heat of reaction by using the compound represented by the above-stated general formula (1) (for example, N-cyclopentyl-N'-(2-hydroxyethyl)ethylenediamine) than by using the conventional amino compound having the branch structure.

Namely, in the diamine compound of the general formula (1), at least one of the cyclic alkyl group whose carbon numbers are 3 to 6 and one of the hydroxyalkyl group are respectively coupled to a nitrogen atom.

As stated above, the diamine compound of the general formula (1) in which the cyclic alkyl group is directly coupled to the nitrogen atom has a structure with a large steric hindrance. Accordingly, it is conceivable that the bicarbonate ion is generated and the heat of reaction is reduced in a reaction with carbon dioxide (CO₂). Besides, in the diamine compound represented by the general formula (1) having two nitrogen atoms in one molecule, the heat of reaction at the acid gas absorption time is reduced, and the acid gas absorption amount per a unit mol is increased compared to an amine compound having one nitrogen atom in one molecule. It is because that the diamine compound represented by the general formula (1) has two reactive sites by the secondary amino group or the secondary amino group and the tertiary amino group in one molecule, and further, in the diamine compound represented by the general formula (1), the cyclic alkyl group is coupled to the nitrogen atom of at least one amino group.

The diamine compound represented by the general formula (1) (hereinafter, it is referred to as the diamine compound (1)) is dissolved in a solvent, for example, such as water, and thereby, an acid gas absorbent whose absorption capacity for the acid gas is high can be obtained. In the following embodiment, a case when the acid gas is carbon dioxide will be described as an example, but the acid gas absorbent according to the embodiment is able to exhibit similar effects for other acid gas such as hydrogen sulfide.

In the above formula (1), R¹, R², R⁴ and R⁵ are groups coupled to the nitrogen atom. In the above formula (1) R¹ represents a cyclopentyl or 2-methylcyclopentyl group, R² represents a hydrogen atom, and R⁴ and R⁵ represent any of the cyclic alkyl group whose carbon number is 3 to 6, the alkyl group whose carbon numbers is 1 to 4, the hydroxyalkyl group, and the hydrogen atom.

One or two of R¹, R⁴ and R⁵ is the cyclic alkyl group having carbon number from 3 to 6. One or two of R⁴ and R⁵ is the hydroxyalkyl group. Namely, R¹, R², R⁴ and R⁵ may be different from one another. Besides, any of two of R¹, R², R⁴ and R⁵ may be the same. Note that at least one of R¹, R⁴ and R⁵ is the cyclic alkyl group whose carbon number is 3 to 6, and at least one of R⁴ and R⁵ is the hydroxyalkyl group.

As the cyclic alkyl group whose carbon number is 3 to 6, for example, a cyclopropyl group, a 2-methylcyclopropyl group, a cyclobutyl group, a 2-methylcyclobutyl group, a 3-methylcyclobutyl group, a cyclopentyl group, a 2-methylcyclopentyl group, a 3-methylcyclopentyl group, a cyclohexyl group can be used.

As the cyclic alkyl group, it may be one replaced by an ethyl group, a propyl group in addition to the methyl group.

The structure in which the cyclic structure is coupled to the nitrogen atom is held, and thereby, the diamine compound of the general formula (1) has the structure with large steric hindrance. Accordingly, the diamine compound of the general formula (1) exhibits low heat of reaction at the acid gas absorption time. Besides, volatility of the diamine compound of the general formula (1) can be suppressed by the cyclic structure as stated above. Accordingly, it is possible for the acid gas absorbent to discharge a reduced amount of the amine component into the atmosphere in the course of processing the exhaust gas.

Among the cyclic alkyl groups, the cyclobutyl group, the 2-methylcyclobutyl group, the 3-methylcyclobutyl group, the cyclopentyl group, the 2-methylcyclopentyl group are preferable from a point of view of solubility of the diamine compound of the above formula (1). The cyclic alkyl group is more preferably the cyclopentyl group, the 2-methylcyclopentyl group.

At least one of R¹, R⁴ and R⁵ of the diamine compound (1) is the cyclic alkyl group. For example, two of R¹, R⁴ and R⁵ of the diamine compound (1) may be the cyclic alkyl groups whose carbon numbers are 3 to 6. Note that it is preferable that the number of the cyclic alkyl group among R¹, R², R⁴ and R⁵ is one from a point of view of reactivity of the diamine compound (1) with the acid gas.

When two of R¹, R², R⁴ and R⁵ are the cyclic alkyl groups, these cyclic alkyl groups are respectively coupled to the different nitrogen atoms from the point of view of increasing the reactivity of the diamine compound (1) with the acid gas. Namely, the number of cyclic alkyl groups coupled to one nitrogen atom is one or less.

As the alkyl group whose carbon number is 1 to 4, for example, the methyl group, the ethyl group, the propyl group, an isopropyl group, a n-butyl group, an iso-butyl group, a sec-butyl group can be used. The methyl group or the ethyl group is preferable, and the methyl group is more preferable among these alkyl groups from the point of view of increasing the reactivity of the diamine compound (1) with the acid gas.

As the diamine compound (1), one of R⁴ and R⁵ may be the alkyl group(s). Besides, as the diamine compound (1), all of R¹, R², R⁴ and R⁵ may be groups other than the alkyl group. The number of the alkyl group whose carbon number is 1 to 4 is one or less among R¹, R², R⁴ and R⁵ from the point of view of increasing the reactivity of the diamine compound (1) with the acid gas.

As the hydroxyalkyl group, for example, a 2-hydroxyethyl group, a 2-hydroxypropyl group, a 3-hydroxypropyl group, a 2-hydroxybutyl group, a 3-hydroxybutyl group, a 4-hydroxybutyl group can be used. It is preferably the 2-hydroxyethyl group or the 2-hydroxypropyl group as the hydroxyalkyl group from the point of view of solubility of the diamine compound of the above formula (1). The hydroxyalkyl group is more preferably the 2-hydroxyethyl group.

As the diamine compound (1), at least one of R⁴ and R⁵ may be the hydroxyalkyl group. As the diamine compound (1), for example, two of R⁴ and R⁵ may be the hydroxyalkyl groups. Note that it is preferable that the number of the hydroxyalkyl group among R¹, R², R⁴ and R⁵ is one from the point of view of increasing the reactivity of the diamine compound (1) with the acid gas.

When two of R¹, R², R⁴ and R⁵ are the hydroxyalkyl groups, these hydroxyalkyl groups are coupled to the same nitrogen atom.

R³ is a group coupled to one of carbon atoms coupled to the nitrogen atoms among the carbon atoms existing between two nitrogen atoms. R³ is the hydrogen atom, the methyl group or the ethyl group. R³ is preferably the methyl group from the point of view of the reactivity of the diamine compound of the above formula (1) with the acid gas. On the other hand, R³ is preferably the hydrogen atom from a point of view of convenience on manufacturing process of the diamine compound (1).

R³ is preferably the methyl group or the ethyl group. When R¹ is the cyclopentyl group or the 2-methylcyclopentyl group, R² is the hydrogen atom, and R³ is the methyl group or the ethyl group, the heat of reaction at the acid gas absorption time is reduced and the reactivity with the acid gas is increased in the diamine compound (1).

"n" is an integer number of 1 or 2. "n" is preferably 1 from the point of view of solubility of the diamine compound (1).

The alkyl group whose carbon number is 1 to 4 of R⁴ and R⁵ may contain a hetero atom such as Si, O, N, S.

It is preferable that, for example, R¹ is the cyclopentyl group and R² is the hydrogen atom as the diamine compound (1). When R¹ is the cyclopentyl group and R² is the hydrogen atom, the heat of reaction at the acid gas absorption time is low and the acid gas absorption amount is increased.

At least one of the two amino groups contained in the diamine compound (1) is the secondary amino group, and both of these two amino groups are groups other than the primary amino group. Namely, when an amino group containing R¹, R² is set to be a first amino group and an amino group containing R⁴, R⁵ is set to be a second amino group, there are cases when both of the first amino group and the second amino group are the secondary amino groups, when the first amino group is the secondary amino group and the second amino group is the tertiary amino group, as the diamine compound (1).

When both of the first amino group and the second amino group are the tertiary amino groups, the acid gas absorption amount of the diamine compound (1) is lowered, and there is a possibility in which enough acid gas absorption capacities cannot be obtained in the acid gas absorbent. On the other hand, when either one of or both of the first amino group and the second amino group is (are) the primary amino group(s), there is a possibility in which the heat of reaction at the acid gas absorption time of the diamine compound (1) becomes high.

At least one of the two amino groups is set to be the secondary amino group, and both of the amino groups are set to be the groups other than the primary amino group, and thereby, the diamine compound (1) whose acid gas absorption amount is high and heat of reaction at the acid gas absorption time is low can be obtained. Among the above, one in which both of the two amino groups are the secondary amino groups is suitable because the acid gas absorption amount is high and the heat of reaction at the acid gas absorption time is low.

As the diamine compound (1) represented by the general formula (1), for example, the followings can be cited. N-cyclopentyl-N'-(2-hydroxyethyl)ethylenediamine, N-cyclopentyl-N'-(2-hydroxypropyl)ethylenediamine, N-cyclopentyl-N'-(3-hydroxypropyl)ethylenediamine, N-cyclopentyl-N'-(2-hydroxyethyl)-1,3-propanediamine, N-cyclopentyl-N'-(2-hydroxypropyl)-1,3-propanediamine, N-cyclopentyl-N'-(3-hydroxypropyl)-1,3-propanediamine.

.

.

.

Besides, as the diamine compound (1) represented by the general formula (1), for example, the followings can be cited. N,N'-dicyclopentyl-N-(2-hydroxyethyl)ethylenediamine, N,N'-dicyclopentyl-N-(2-hydroxypropyl)ethylenediamine, N,N'-dicyclopentyl-N-(3-hydroxypropyl)ethylenediamine, N,N'-dicyclopentyl-N-(2-hydroxyethyl)-1,3-propanediamine, N,N'-dicyclopentyl-N-(2-hydroxypropyl)-1,3-propanediamine, N,N'-dicyclopentyl-N-(3-hydroxypropyl)-1,3-propanediamine.

Note that one type of compound selected from the above-stated groups can be used as the diamine compound (1). Otherwise, one in which two or more types of compounds selected from the above-stated groups are mixed can also be used as the diamine compound (1).

It is preferable that a content of the diamine compound (1) contained in the acid gas absorbent is 10 mass% to 55 mass%. In general, an absorption amount and a desorption amount of carbon dioxide per unit capacity are larger and an absorption speed and a desorption speed of carbon dioxide are faster as a concentration of the amine component is higher, and therefore, this is preferable in view of energy consumption, a size of a plant facility, and process efficiency. However, it becomes impossible for the water contained in the absorbing liquid to fully exhibit a function as an activator for the absorption of carbon dioxide when the concentration of the amine component in the absorbing liquid is too high. Besides, defects such as an increase of viscosity of the absorbing liquid become not negligible when the concentration of the amine component in the absorbing liquid is too high. When the content of the diamine compound (1) is 55 mass% or less, phenomena such as the increase of the viscosity of the absorbing liquid and the deterioration of the function of water as the activator are not recognized. Besides, by setting the content of the diamine compound (1) to 10 mass% or more, it is possible to obtain sufficient absorption amount and absorption speed of carbon dioxide, and to obtain excellent process efficiency.

When the acid gas absorbent in which the content of the diamine compound (1) is within a range of 10 mass% to 55 mass% is used for recovery of carbon dioxide, not only the absorption amount of carbon dioxide and the absorption speed of carbon dioxide are high but also the desorption amount of carbon dioxide and the desorption speed of carbon dioxide are high. Accordingly, it is advantageous in that the recovery of carbon dioxide can be performed efficiently. The content of the diamine compound (1) is more preferably 20 mass% to 50 mass%.

It is preferable that the diamine compound (1) is used while being mixed with a reaction accelerator composed of alkanolamines and/or a hetero cyclic amine compound represented by the following general formula (2) (hereinafter, referred to as the hetero cyclic amine compound (2)).

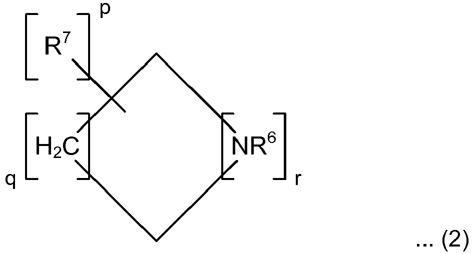

In the formula (2), R⁶ represents the hydrogen atom or a substituted or non-substituted alkyl group whose carbon number is 1 to 4. R⁷ represents a substituted or non-substituted alkyl group whose carbon number is 1 to 4 and which is coupled to the carbon atom. "r" represents an integer number of 1 to 3, "q" represents an integer number of 1 to 4, and "p" represents an integer number of "0" (zero) to 12.
When "r" is 2 to 3, the nitrogen atoms are not directly coupled with each other.

In the present embodiment, it is possible to mix, for example, the diamine compound (1) and the reaction accelerator composed of the alkanolamines and/or the hetero cyclic amine compound (2). In addition, as the acid gas absorbent, it is possible to use one in which the mixture of the diamine compound (1) and the alkanolamines and/or the hetero cyclic amine compound (2) is made into, for example, a water solution. By using the diamine compound (1) mixed with the alkanolamines and/or the hetero cyclic amine compound (2), it is possible to further improve the absorption amount of carbon dioxide per unit mol of the diamine compound (1), the absorption amount of carbon dioxide and the absorption speed of carbon dioxide per unit volume of the acid gas absorbent. Besides, the use of the diamine compound (1) mixed with the alkanolamines and/or the hetero cyclic amine compound (2) lowers an energy separating the acid gas after the absorption of carbon dioxide (acid gas desorption energy), and also makes it possible to reduce the energy when the acid gas absorbent is regenerated.

For example, monoethanolamine, 2-amino-2-methylpropanolamine, 2-amino-2-methyl-1, 3-dipropanolamine, methylaminoethanol, ethylaminoethanol, propylaminoethanol, diethanolamine, bis(2-hydroxy-1-methylethyl)amine, methyldiethanolamine, dimethylethanolamine, diethylethanolamine, triethanolamine, dimethylamino-1-methylethanol, 2-methylaminoethanol, 2-ethylaminoethanol, 2-propylaminoethanol, n-butylaminoethanol, 2-(isopropylamino)ethanol, 3-ethylaminopropanol, triethanolamine, diethanolamine, and so on can be cited as alkanolamine.

Among them, alkanolamines is preferably at least one type selected from a group consisting of 2-(isopropylamino)ethanol, 2-(ethylamino)ethanol, and 2-amino-2-methyl-1-propanol, from the point of view of improving the reactivity between the diamine and the acid gas.

As the hetero cyclic amine compound (2), azetidine, 1-methylazetidine, 1-ethylazetidine, 2-methylazetidine, 2-azetidinemethanol, 2-(2-aminoethyl)azetidine, pyrrolidine, 1-methylpyrrolidine, 2-methylpyrrolidine, 2-butylpyrrolidine, 2-pyrrolidinemethanol, 2-(2-aminoethyl)pyrrolidine, piperidine, 1-methylpiperidine, 2-ethylpiperidine, 3-propylpiperidine, 4-ethylpiperidine, 2-piperidinemethanol, 3-piperidineethanol, 2-(2-aminoethyl)pyrrolidine, hexahydro-1H-azepine, hexamethylenetetramine, piperazine, piperazine derivatives, and so on can be cited.

Among them, the piperazine derivative is particularly desirable from points of view of improvements of the carbon dioxide absorption amount and absorption speed of the acid gas absorbent. The piperazine derivative is a secondary amine compound, and in general, the nitrogen atom of the secondary amino group is coupled to carbon dioxide to form carbamate ion, and thereby, it contributes to the improvement of the absorption speed at an initial stage of the reaction. Further, the nitrogen atom of the secondary amino group has a role of converting carbon dioxide coupled thereto into bicarbonate (HCO₃⁻), and contributes to the improvement of speed at a half stage after the reaction.

The piperazine derivative is more preferably at least one type from among 2-methylpiperazine, 2,5-dimethylpiperazine, 2,6-dimethylpiperazine.

It is preferable that the content of the reaction accelerator (the alkanolamines and/or the hetero cyclic amine compound (2)) contained in the acid gas absorbent is 1 mass% to 20 mass%. There is a possibility that the effect of improving the absorption speed of carbon dioxide cannot be fully obtained when the content of the reaction accelerator contained in the acid gas absorbent is less than 1 mass%. When the content of the reaction accelerator contained in the acid gas absorbent exceeds 20 mass%, there is a possibility that the reactivity conversely deteriorates because the viscosity of the absorbent becomes excessively high. The content of the reaction accelerator (the alkanolamines and/or the hetero cyclic amine compound (2)) is more preferably 5 mass% to 15 mass%.

The acid gas absorbent may contain an anticorrosive of a phosphoric acid based material or the like to prevent a corrosion of the plant equipment, a defoamer of a silicone based material and so on to prevent effervescence, an antioxidant to prevent deterioration of the acid gas absorbent, and so on, in addition to the amine compound and the reaction accelerator as stated above.

An acid gas removal method according to the present embodiment is one in which exhaust gas containing acid gas is brought into contact with an acid gas absorbent made up by dissolving the amine compound described in the above-stated embodiment in a solvent, and the acid gas is absorbed and separated to be removed from the exhaust gas containing the acid gas.

A basic constitution of an absorbing and separating process of carbon dioxide includes: a process bringing exhaust gas containing carbon dioxide into contact with an acid gas absorbent to make the acid gas absorbent absorb the carbon dioxide (carbon dioxide absorbing process); and a process heating the acid gas absorbent by which the carbon dioxide is absorbed, that is obtained at the carbon dioxide absorbing process, to desorb and recover the carbon dioxide (carbon dioxide separating process).

A method to bring the gas containing the carbon dioxide into contact with a water solution containing the acid gas absorbent is not particularly limited, but for example, this process is performed by a method in which the gas containing the carbon dioxide is bubbled in the acid gas absorbent, whereby the carbon dioxide is absorbed, a method in which the acid gas absorbent is atomized and sprayed in a flow of the gas containing the carbon dioxide (atomizing or spraying method), a method in which the gas containing the carbon dioxide is brought into countercurrent contact with the acid gas absorbent in an absorption tower containing a filler made of a porcelain or a filler made of a metal net, or the like.

A temperature of the acid gas absorbent when the gas containing the carbon dioxide is absorbed in the water solution is generally set within a range from a room temperature to 60°C or less. The temperature is preferably 50°C or less, and more preferably approximately 20°C to 45°C. The absorption amount of the acid gas increases as the temperature is lower, but a lower limit value of the process temperature is determined by a gas temperature, a heat recovery target and so on in the process. A pressure at the carbon dioxide absorption time is generally approximately the atmospheric pressure. It is possible to pressurize up to higher pressure to enhance the absorption performance, but in order to suppress energy consumption required for compression, it is preferable to set under the atmospheric pressure.

In the carbon dioxide absorption process, the carbon dioxide absorption amount at the carbon dioxide absorption time (40°C) of the acid gas absorbent containing 10 mass% to 55 mass% of the amine compound according to the above-stated embodiment is approximately 0.26 mol to 0.62 mol per 1 mol of amine contained in the absorbent. Besides, in the carbon dioxide absorption process, the carbon dioxide absorption speed of the acid gas absorbent containing 10 mass% to 55 mass% of the amine compound according to the embodiment after a few minutes have passed since the absorption of carbon dioxide is started is approximately 0.029 mol/L/min to 0.038 mol/L/min.

Here, a carbon dioxide saturation absorption amount is a value of an inorganic carbon amount measured in the acid gas absorbent by an infrared gas concentration measurement device. Besides, the carbon dioxide absorption speed is a value measured by using an infrared carbon dioxide sensor at a time when a few minutes have passed since the absorption of the carbon dioxide is started.

Examples of a method separating the carbon dioxide from the acid gas absorbent by which the carbon dioxide is absorbed, and recovering pure or high-concentration carbon dioxide are a method desorbing the carbon dioxide by heating the acid gas absorbent and beating it in an iron pot as in distillation, a method spreading a liquid interface in a regeneration tower, for example, a plate tower, a spray tower, and a tower containing a filler made of a porcelain or a filler made of a metal net, followed by heating, and so on. The carbon dioxide is thereby released and discharged from anionic carbamate and bicarbonate.

A temperature of the acid gas absorbent at the carbon dioxide separation time is normally set to 70°C or more. The temperature of the acid gas absorbent at the carbon dioxide separation time is preferably 80°C or more, and more preferably approximately 90°C to 120°C. The absorption amount increases as the temperature is higher, but the energy required for the heating of the absorbing liquid increases if the temperature is increased. Accordingly, the temperature of the acid gas absorbent at the carbon dioxide separation time is determined by the gas temperature, the heat recovery target and so on in the process. The pressure at the carbon dioxide desorption time is generally approximately the atmospheric pressure. It is possible to decrease the pressure to a lower pressure to enhance the desorption performance, but in order to suppress energy consumption required to decrease the pressure, the pressure is preferably the atmospheric pressure.

The carbon dioxide desorption amount at the carbon dioxide desorption time (80°C) of the water solution containing 10 mass% to 55 mass% of the amine compound according to the above-stated embodiment is approximately 0.15 mol to 0.47 mol per 1 mol of amine contained in the absorbent.

The acid gas absorbent after the carbon dioxide is separated is transferred to the carbon dioxide absorption process again to be cyclically used (recycled). Besides, the heat generated at the carbon dioxide absorption time is generally heat exchanged by a heat exchanger for preheating the water solution injected into the regeneration tower during a recycle process of the water solution, and is cooled.

Purity of the carbon dioxide recovered as stated above is normally extremely high such as approximately 95 vol% to 99 vol%. This pure carbon dioxide or high-concentration carbon dioxide is used as chemicals, synthetic raw materials of high polymer, a coolant for freezing foods, and so on. In addition, it is possible to isolate and store the recovered carbon dioxide to an underground or the like by means which is currently technically developed.

The process separating the carbon dioxide from the acid gas absorbent and regenerating the acid gas absorbent, out of the aforesaid processes, is a part consuming the largest amount of energy, and this process consumes approximately 50% to 80% of the energy consumed in all the processes. Accordingly, by reducing the consumption energy at the regeneration process of the acid gas absorbent, it is possible to reduce a cost of the carbon dioxide absorbing and separating process. Accordingly, it is possible to remove the acid gas from the exhaust gas advantageously from an economical viewpoint.

According to the present embodiment, it is possible to reduce the energy required for the desorption of the carbon dioxide (regeneration process) by using the acid gas absorbent according to the above-stated embodiment. Accordingly, it is possible to perform the absorbing and separating process of the carbon dioxide under an economically advantageous condition.

Besides, the amine compound according to the embodiment is extremely highly anticorrosive to a metal material such as a carbon steel, compared to alkanolamines such as 2-aminoethanol which has been conventionally used as the acid gas absorbent. Accordingly, it is cost-advantageous to use the acid gas removal method using the acid gas absorbent as stated above because it is not necessary to use expensive corrosion-resistant steel in, for example, a plant construction.

An acid gas removal device according to the present embodiment is an acid gas removal device removing acid gas from gas containing the acid gas, the acid gas removal device includes:
an absorption tower containing the acid gas absorbent according to the above-stated embodiment and bringing the gas containing acid gas into contact with the acid gas absorbent to remove the acid gas from the gas; and a regeneration tower configured to contain the acid gas absorbent having the acid gas absorbed at the absorption tower so as to regenerate the acid gas absorbent to be reused at the absorption tower by removing the acid gas from the acid gas absorbent.

FIG. 1 is a schematic diagram of an acid gas removal device according to an embodiment. This acid gas removal device 1 includes: an absorption tower 2 bringing gas containing acid gas (hereinafter, referred to as exhaust gas) into contact with an acid gas absorbent to absorb and remove the acid gas from the exhaust gas; and a regeneration tower 3 separating the acid gas from the acid gas absorbent absorbing the acid gas to regenerate the acid gas absorbent. Hereinafter, a case when the acid gas is carbon dioxide will be described as an example.

As illustrated in FIG. 1, exhaust gas containing carbon dioxide, such as exhaust combustion gas discharged from a thermal power station is introduced to a lower part of the absorption tower 2 through a gas supply port 4. This exhaust gas is shut in the absorption tower 2, and it is brought into contact with an acid gas absorbent supplied from an acid gas absorbent supply port 5 at an upper part of the absorption tower 2. The acid gas absorbent according to the above-stated embodiment is used as the acid gas absorbent.

A pH value of the acid gas absorbent may be adjusted to at least 9 or more. An optimum condition of the pH value of the acid gas absorbent may be appropriately selected depending on a kind or a concentration of harmful gas contained in the exhaust gas, a flow rate, and so on. Besides, the acid gas absorbent may contain other compounds such as a nitrogen-containing compound improving carbon dioxide absorption performance, an antioxidant, a pH adjusting agent in an arbitrary ratio, in addition to the amine based compound which are described above and the solvent such as water.

As stated above, the exhaust gas is brought into contact with the acid gas absorbent, and thereby, the carbon dioxide in the exhaust gas is absorbed by the acid gas absorbent and removed. The exhaust gas after the carbon dioxide is removed is discharged to the outside of the absorption tower 2 from a gas discharge port 6.

The acid gas absorbent absorbing the carbon dioxide is transferred to a heat exchanger 7 and a heater 8 to be heated, and thereafter, transferred to the regeneration tower 3. The acid gas absorbent transferred into the regeneration tower 3 is moved from an upper part to a lower part of the regeneration tower 3. The carbon dioxide in the acid gas absorbent is desorbed during the moving, and the acid gas absorbent is regenerated.

The acid gas absorbent regenerated in the regeneration tower 3 is transferred to the heat exchanger 7 and an absorbing liquid cooler 10 by a pump 9, and returned to the absorption tower 2 from the acid gas absorbent supply port 5.

On the other hand, the carbon dioxide separated from the acid gas absorbent is brought into contact with reflux water supplied from a reflux drum 11 at the upper part of the regeneration tower 3, and discharged to the outside of the regeneration tower 3. The reflux water in which the carbon dioxide is dissolved is cooled in a reflux condenser 12, and thereafter, in the reflux drum 11, it is separated from a liquid component in which vapor with the carbon dioxide is condensed. This liquid component is introduced to the carbon dioxide recovery process by a recovery carbon dioxide line 13. On the other hand, the reflux water from which the carbon dioxide is separated is transferred to the regeneration tower 3 by a reflux water pump 14.

According to the acid gas removal device 1 of the present embodiment, it becomes possible to absorb and remove carbon dioxide highly efficiently by using the acid gas absorbent excellent in carbon dioxide absorption feature and desorption feature.

Hereinabove, the embodiments of the present invention are described with reference to the concrete examples, but the above-stated examples are presented only as examples of the present invention, and do not to intend to limit the invention. Besides, the description of the embodiments does not give a description relating to portions and so on which are not directly necessary for the explanation of the present invention, in the acid gas absorbent, the acid gas removal device, and the acid gas removal method. However, required elements among them may be appropriately selected to be used.

In addition, acid gas absorbents, acid gas removal devices, and acid gas removal methods that include the elements of the present invention and that a person skilled in the art could achieve by appropriately making design changes without departing from the spirit or essential characteristics thereof are all embraced in the range of the present invention. The range of the present invention is defined by a range of the claims and a range of equivalents thereof.

### [Examples]

Hereinafter, the present invention will be described in more detail with reference to examples, reference examples and a comparative example, but the present invention is not limited to these examples.

### (Example 1)

A water solution of 50 ml (hereinafter, referred to as an absorbing liquid) was prepared by dissolving 45 mass% of N-cyclopentyl-N'-(2-hydroxyethyl) ethylenediamine, and 5 mass% of piperazine in water. This absorbing liquid was filled in a test tube and heated to 40°C, then mixed gas containing 10 vol% carbon dioxide (CO₂) and 90 vol% nitrogen (N₂) gas was aerated at a flow rate of 500 mL/min. Absorption performance was evaluated by measuring the carbon dioxide (CO₂) concentration in the gas at an exit of the test tube by using an infrared gas concentration measurement device (manufactured by Shimadzu Corporation, name of article: "CGT-700"). A Teflon (registered trademark) tube (inside diameter: 1.59 mm, outside diameter: 3.17 mm) of 1/8 inches was set at a gas introducing port to the amine solution in the test tube. Besides, the water solution after the mixed gas was absorbed at 40°C as stated above was heated to 80°C, 100% nitrogen (N₂) gas was aerated at a flow rate of 500 mL/min, and the CO₂ concentration in the absorbing liquid was measured by using the infrared gas concentration measurement device to evaluate release performance. A carbon dioxide absorption amount of the absorbing liquid at 40°C was 0.85 mol per 1 mol of an amino compound in the absorbing liquid. A carbon dioxide (CO₂) absorption amount of the absorbing liquid at 80°C was 0.40 mol per 1 mol of the amino compound. In a process of absorbing the carbon dioxide (CO₂) at 40°C and desorbing the carbon dioxide (CO₂) at 80°C, 0.45 mol CO₂ was recovered per 1 mol of the amino compound. Heat of reaction was 68 kJ/mol.

The heat of reaction was measured as follows. A differential reaction calorimeter "DRC" (product name, manufactured by SETARAM company) composed of a glass reaction vessel and a reference vessel with the same shape installed in a thermostatic oven was used to measure the heat of reaction of the carbon dioxide absorption by the absorbing liquid. The reaction vessel and the reference vessel were each filled with a 150 mL absorbing liquid, and 40°C constant-temperature water was circulated in jacket portions of the vessels. In this state, carbon dioxide gas with a 100% concentration was blown to the absorbing liquid in the reaction vessel at 200 ml/min, a temperature increase of the liquid was continuously recorded by a thermograph until the carbon dioxide absorption was finished, and the heat of reaction was calculated by using an overall heat transfer coefficient between the reaction vessel and the jacket water which was measured in advance.

### (Reference Example 2)

An absorbing liquid (water solution) was prepared in the same manner as in the example 1 except that N-cyclobutyl-N'-(2-hydroxyethyl)-1,3-propanediamine was used instead of N-cyclopentyl-N'-(2-hydroxyethyl)ethylenediamine. The absorption amount of carbon dioxide and the heat of reaction were measured under the same conditions by using the same devices as those of the example 1. The absorption amount of carbon dioxide at 40°C was 0.70 mol and the absorption amount of carbon dioxide at 80°C was 0.40 mol, per 1 mol of an amino compound in the absorbing liquid. 0.30 mol carbon dioxide was recovered per 1 mol of the amino compound in the absorbing liquid. The heat of reaction was 69 kJ/mol.

### (Example 3)

An absorbing liquid (water solution) was prepared in the same manner as in the example 1 except that N-cyclopentyl-N'-(2-hydroxyethyl)-N'-methylethylenediamine was used instead of N-cyclopentyl-N'-(2-hydroxyethyl)ethylenediamine. The absorption amount of carbon dioxide and the heat of reaction were measured under the same conditions by using the same devices as those of the example 1. The absorption amount of carbon dioxide at 40°C was 0.63 mol and the absorption amount of carbon dioxide at 80°C was 0.39 mol, per 1 mol of an amino compound in the absorbing liquid. 0.24 mol carbon dioxide was recovered per 1 mol of the amino compound in the absorbing liquid. The heat of reaction was 67 kJ/mol.

### (Reference Example 4)

An absorbing liquid (water solution) was prepared in the same manner as in the example 1 except that N-cyclopentyl-N-methyl-N'-(2-hydroxyethyl)ethylenediamine was used instead of N-cyclopentyl-N'-(2-hydroxyethyl)ethylenediamine. The absorption amount of carbon dioxide and the heat of reaction were measured under the same conditions by using the same devices as those of the example 1. The absorption amount of carbon dioxide at 40°C was 0.65 mol and the absorption amount of carbon dioxide at 80°C was 0.38 mol, per 1 mol of an amino compound in the absorbing liquid. 0.27 mol carbon dioxide was recovered per 1 mol of the amino compound in the absorbing liquid. The heat of reaction was 67 kJ/mol.

### (Example 5)

A 50 ml absorbing liquid (water solution) was prepared by dissolving 40 mass% of N-cyclopentyl-N'-(2-hydroxyethyl)ethylenediamine , 5 mass% of piperazine and 5 mass% of 2-amino-2-methyl-1-propanol in water. The absorption amount of carbon dioxide and the heat of reaction were measured under the same conditions by using the same devices as those of the example 1. The absorption amount of carbon dioxide at 40°C was 0.89 mol and the absorption amount of carbon dioxide at 80°C was 0.45 mol, per 1 mol of an amino compound in the absorbing liquid. 0.44 mol carbon dioxide was recovered per 1 mol of the amino compound in the absorbing liquid. The heat of reaction was 70 kJ/mol.

### (Example 6)

An absorbing liquid (water solution) was prepared in the same manner as in the example 1 except that N-(2-methylcyclopentyl)-N'-(2-hydroxyethyl)ethylenediamine was used instead of N-cyclopentyl-N'-(2-hydroxyethyl)ethylenediamine. The absorption amount of carbon dioxide and the heat of reaction were measured under the same conditions by using the same devices as those of the example 1. The absorption amount of carbon dioxide at 40°C was 0.80 mol and the absorption amount of carbon dioxide at 80°C was 0.40 mol, per 1 mol of an amino compound in the absorbing liquid. 0.40 mol carbon dioxide was recovered per 1 mol of the amino compound in the absorbing liquid. The heat of reaction was 67 kJ/mol.

### (Comparative Example 1)

A water solution of 50 ml (hereinafter, referred to as an absorbing liquid) was prepared by dissolving 60 mass% of n-propyldiethanolamine and, 5 mass% of piperazine in water. After that, The absorption amount of carbon dioxide and the heat of reaction were measured under the same conditions by using the same devices as those of the example 1.

The absorption amount of carbon dioxide at 40°C was 0.20 mol and the absorption amount of carbon dioxide at 80°C was 0.08 mol, per 1 mol of an amino compound in the absorbing liquid. 0.12 mol carbon dioxide was recovered per 1 mol of the amino compound in the absorbing liquid. The heat of reaction was 65 kJ/mol.

The measurement results of the absorption amount of carbon dioxide at 40°C, the absorption amount of carbon dioxide at 80°C, the recovery amount of carbon dioxide, and the heat of reaction in the examples 1 to 6 and the comparative example 1 are shown in Table 1, together with the contents of the amine compound and the reaction accelerator in the absorbing liquid. Note that in Table 1, the absorption amount of carbon dioxide and the recovery amount of carbon dioxide are the absorption amount and the recovery amount per 1 mol of the amine compound contained in the absorbing liquid, which are expressed in the number of moles.

**[Table 1]**

| | Amine Compound [mass%] | Reaction Accelerator | | CO₂ Absorption Amount (40°C) [mol] | CO₂ Absorption Amount (80°C) [mol] | CO₂ Recovery Amount [mol] | Heat of Reaction [kJ/mol] |
|---|---|---|---|---|---|---|---|
| | | Alkanolamine | Hetero Cyclic Amine Compound | | | | |
| Example 1 | 45 | - | 5 | 0.85 | 0.40 | 0.45 | 68 |
| Reference Example 2 | 45 | - | 5 | 0.70 | 0.40 | 0.30 | 69 |
| Example 3 | 45 | - | 5 | 0.63 | 0.39 | 0.24 | 67 |
| Reference Example 4 | 45 | - | 5 | 0.65 | 0.38 | 0.27 | 67 |
| Example 5 | 40 | 5 | 5 | 0.89 | 0.45 | 0.44 | 70 |
| Example 6 | 45 | - | 5 | 0.80 | 0.40 | 0.40 | 67 |
| Comparative Example 1 | 60 | - | 5 | 0.20 | 0.08 | 0.12 | 65 |

As it is obvious from Table 1, in the absorbing liquids of the (reference) examples 1 to 6 using the diamine compound having the cyclic alkyl group, the recovery amount of carbon dioxide was high, the heat of reaction at the carbon dioxide absorption time was low, and the carbon dioxide absorption performance was excellent. Particularly in the absorbing liquids of the (reference) examples 1 and 6 each using the diamine compound in which both of the two amino groups are the secondary amino groups, the carbon dioxide absorption performances were excellent such that the recovery amounts of carbon dioxide were high such as 0.40 mol and 0.45 mol, and the heat of reaction of the carbon dioxide absorption was low such as 67 kJ/mol to 68 kJ/mol. On the other hand, in the comparative example 1 using butyldiethanolamine (BDEA) not having the cyclic alkyl group as the amine compound, the recovery amount of carbon dioxide was low such as 0.12 mol, and the heat of reaction was high such as 65 kJ/mol in proportion to the small absorption amount.

According to the acid gas absorbent, the acid gas removal method, and the acid gas removal device of at least one of the embodiments described above, it is possible to increase the absorption amount of acid gas such as carbon dioxide, and to reduce the heat of reaction at the acid gas absorption time. Several embodiments of the present invention are described, but these embodiments are to be considered in all respects as illustrative and no restrictive.

While certain embodiments have been described, these embodiments have been presented by way of example only, and are not intended to limit the scope of the inventions.

## Claims

1. An acid gas absorbent comprising at least one type of diamine compound represented by the following general formula (1),
R¹R²N-(CHR³)ₙ-CH₂-NR⁴R⁵ ... (1),
where, R¹ represents a cyclopentyl or 2-methylcyclopentyl group, R² represents a hydrogen atom, R⁴ and R⁵ represent any of: a cyclic alkyl group having carbon number from 3 to 6; an alkyl group having carbon number from 1 to 4; a hydroxyalkyl group; and a hydrogen atom, and R³ represents any of: a hydrogen atom, a methyl group, and an ethyl group,
"n" represents an integer number of 1 or 2,
one or two of R¹, R⁴ and R⁵ is the cyclic alkyl group having carbon number from 3 to 6, and
one or two of R⁴ and R⁵ is the hydroxyalkyl group.

2. The acid gas absorbent according to claim 1,
wherein R⁴ in the diamine compound represented by the general formula (1) is a 2-hydroxyethyl group.

3. The acid gas absorbent according to claim 1 or claim 2,
wherein R¹ is a cyclopentyl group in the general formula (1), and R² is the hydrogen atom in the general formula (1).

4. The acid gas absorbent according to any one of claims 1 to 3,
wherein a content of the diamine compound represented by the general formula (1) is 10 mass% to 55 mass%.

5. The acid gas absorbent according to any one of claims 1 to 4,
further comprising a reaction accelerator consisting of alkanolamines and/or a hetero cyclic amine compound represented by the following general formula (2),
wherein a content of the reaction accelerator is 1 mass% to 20 mass%, 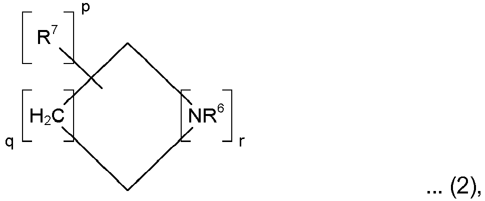 where the formula (2), R⁶ represents the hydrogen atom or an alkyl group whose carbon number is 1 to 4, R⁷ represents an alkyl group whose carbon number is 1 to 4 and which is coupled to a carbon atom; "r" represents an integer number of 1 to 3, "q" represents an integer number of 1 to 4, and "p" represents an integer number of "0" (zero) to 12; when "r" is 2 to 3, nitrogen atoms are not directly coupled with each other.

6. The acid gas absorbent according to claim 5,
wherein the alkanolamines are at least one type selected from a group consisting of 2-(isopropylamino)ethanol, 2-(ethylamino)ethanol, and 2-amino-2-methyl-1-propanol.

7. The acid gas absorbent according to claim 5 or claim 6,
wherein the hetero cyclic amine compound includes at least one type selected from a group consisting of piperazines.

8. The acid gas absorbent according to claim 7,
wherein the piperazines are at least one type selected from a group consisting of piperazine, 2-methylpiperazine, 2,5-dimethylpiperazine, and 2,6-dimethylpiperazine.

9. An acid gas removal method comprising;
bringing gas containing acid gas into contact with the acid gas absorbent according to any one of claims 1 to 8 to remove the acid gas from the gas containing the acid gas.

10. An acid gas removal device removing acid gas from gas containing the acid gas, the device, comprising:
an absorption tower containing the acid gas absorbent
according to any one of claims 1 to 8 and bringing the gas containing the acid gas into contact with the acid gas absorbent to remove the acid gas from the gas; and
a regeneration tower configured to contain the acid gas absorbent having the acid gas absorbed at the absorption tower so as to regenerate the acid gas absorbent to be reused at the absorption tower by removing the acid gas from the acid gas absorbent.

## Patentansprüche

1. Säuregasabsorbens, beinhaltend mindestens eine Art von Diaminverbindung, dargestellt durch die folgende allgemeine Formel (1),
R¹R²N-(CHR³)ₙ-CH₂-NR⁴R⁵ ... (1),
wobei R¹ eine Cyclopentyl- oder eine 2-Methylcyclopentylgruppe darstellt, R² ein Wasserstoffatom darstellt, R⁴ und R⁵ ein beliebiges Element der Gruppe darstellen, bestehend aus: einer zyklischen Alkylgruppe, welche eine Kohlenstoffzahl von 3 bis 6 besitzt; einer Alkylgruppe, welche eine Kohlenstoffzahl von 1 bis 4 besitzt; einer Hydroxyalkylgruppe; und einem Wasserstoffatom, und wobei R³ ein beliebiges Element der Gruppe darstellt, bestehend aus: einem Wasserstoffatom, einer Methylgruppe und einer Ethylgruppe,
wobei "n" eine Ganzzahl der Gruppe darstellt, bestehend aus 1 oder 2,
wobei ein oder zwei Elemente der Gruppe, bestehend aus R¹, R⁴ und R⁵, die Alkylgruppe bildet/bilden, welche eine Kohlenstoffzahl von 3 bis 6 besitzt, und
ein oder zwei der Elemente der Gruppe, bestehend aus R⁴ und R⁵, die Hydroxyalkylgruppe bildet/bilden.

2. Säuregasabsorbens nach Anspruch 1,
bei welchem R⁴ in der Diaminverbindung, welche durch die allgemeine Formel (1) dargestellt ist, eine 2-Hydroxyethylgruppe ist.

3. Säuregasabsorbens nach Anspruch 1 oder 2, bei welchem R¹ eine Cyclopentylgruppe in der allgemeinen Formel (1) ist, und R² das Wasserstoffatom in der allgemeinen Formel (1) ist.

4. Säuregasabsorbens nach einem der Ansprüche 1 bis 3,
bei welchem ein Gehalt der Diaminverbindung, welche durch die allgemeine Formel (1) dargestellt ist, 10 bis 55 Gewichtsprozent beträgt.

5. Säuregasabsorbens nach einem der Ansprüche 1 bis 4, zudem beinhaltend einen Reaktionsbeschleuniger, bestehend aus Alkanolaminen und/oder einer heterozyklischen Aminverbindung, dargestellt durch folgende allgemeine Formel (2),
wobei ein Gehalt an Reaktionsbeschleuniger 1 bis 20 Gewichtsprozent beträgt, 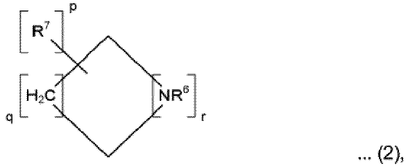 wobei in der Formel (2) R⁶ das Wasserstoffatom oder eine Alkylgruppe darstellt, deren Kohlenstoffzahl 1 bis 4 beträgt, R⁷ eine Alkylgruppe darstellt, deren Kohlenstoffzahl 1 bis 4 beträgt und welche mit einem Kohlenstoffatom verbunden ist; wobei "r" eine Ganzzahl der Gruppe, bestehend aus 1 bis 3, darstellt, "q" eine Ganzzahl der Gruppe, bestehend aus 1 bis 4, darstellt, und "p" eine Ganzzahl der Gruppe, bestehend aus "0" (null) bis 12, darstellt; wobei wenn "r" 2 bis 3 beträgt, Stickstoffatome nicht direkt miteinander verbunden sind.

6. Säuregasabsorbens nach Anspruch 5,
bei welchem die Alkanolamine mindestens Alkanolamine einer Art sind, gewählt aus einer Gruppe, bestehend aus 2-(Isopropylamino)ethanol, 2-(Ethylamino)ethanol und 2-Amino-2-methyl-1-propanol.

7. Säuregasabsorbens nach Anspruch 5 oder 6
bei welchem die heterozyklische Aminverbindung mindestens eine Art beinhaltet, gewählt aus einer Gruppe, bestehend aus Piperazinen.

8. Säuregasabsorbens nach Anspruch 7,
bei welchem die Piperazine mindestens Piperazine einer Art sind, gewählt aus einer Gruppe, bestehend aus Piperazin, 2-Methylpiperazin, 2,5-Dimethylpiperazin und 2,6-Dimethylpiperazin.

9. Säuregasentfernungsverfahren, Folgendes beinhaltend;
Inkontaktbringen von säuregashaltigem Gas mit dem Säuregasabsorbens nach einem der Ansprüche 1 bis 8 zum Entfernen des Säuregases aus dem säuregashaltigen Gas.

10. Säuregasentfernungsvorrichtung, welche Säuregas aus Gas, welches das Säuregas enthält, entfernt, wobei die Vorrichtung Folgendes beinhaltet:
einen Absorptionsturm, welcher das Säuregasabsorbens nach einem der Ansprüche 1 bis 8 fasst und das Gas, welches das Säuregas enthält, mit dem Säuregasabsorbens in Kontakt bringt, um das Säuregas aus dem Gas zu entfernen; und
einen Regenerationsturm, konfiguriert zum Fassen des Säuregasabsorbens, welches das Säuregas im Absorptionsturm absorbiert hat, um so das Säuregasabsorbens zu regenerieren, damit es in dem Absorptionsturm durch Entfernen des Säuregases aus dem Säuregasabsorbens wiederverwendet werden kann.

## Revendications

1. Agent absorbant de gaz acide comprenant au moins un type de composé de diamine représenté par la formule générale (1) suivante,
R¹R²N-(CHR³)ₙ-CH₂-NR⁴R⁵ ... (1),
où R¹ représente un groupe cyclopentyle ou 2-méthylcyclopentyle, R² représente un atome d'hydrogène, R⁴ et R⁵ représentent l'un quelconque parmi : un groupe alkyle cyclique ayant un nombre d'atomes de carbone de 3 à 6 ; un groupe alkyle ayant un nombre d'atomes de carbone de 1 à 4 ; un groupe hydroxyalkyle ; et un atome d'hydrogène, et R³ représente l'un quelconque parmi : un atome d'hydrogène, un groupe méthyle et un groupe éthyle,
« n » représente un nombre entier valant 1 ou 2,
un ou deux parmi R¹, R⁴ et R⁵ sont le groupe alkyle cyclique ayant un nombre d'atomes de carbone de 3 à 6, et
un ou deux parmi R⁴ et R⁵ sont le groupe hydroxyalkyle.

2. Agent absorbant de gaz acide selon la revendication 1,
dans lequel R⁴ dans le composé de diamine représenté par la formule générale (1) est un groupe 2-hydroxyéthyle.

3. Agent absorbant de gaz acide selon la revendication 1 ou la revendication 2,
dans lequel R¹ est un groupe cyclopentyle dans la formule générale (1), et R² est l'atome d'hydrogène dans la formule générale (1).

4. Agent absorbant de gaz acide selon l'une quelconque des revendications 1 à 3, dans lequel une teneur du composé de diamine représenté par la formule générale (1) est de 10 % en masse à 55 % en masse.

5. Agent absorbant de gaz acide selon l'une quelconque des revendications 1 à 4,
comprenant en outre un accélérateur de réaction constitué par des alcanolamines et/ou un composé d'amine hétérocyclique représenté par la formule générale (2) suivante,
dans lequel une teneur de l'accélérateur de réaction est de 1 % en masse à 20 % en masse, 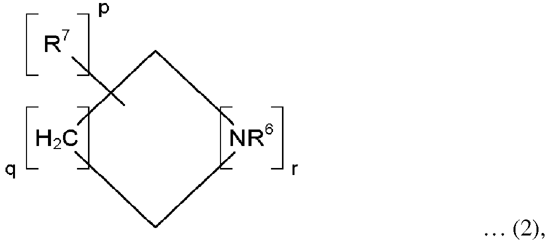 où dans la formule (2), R⁶ représente l'atome d'hydrogène ou un groupe alkyle dont le nombre d'atomes de carbone est de 1 à 4, R⁷ représente un groupe alkyle dont le nombre d'atomes de carbone est de 1 à 4 et qui est couplé à l'atome de carbone ; « r » représente un nombre entier de 1 à 3, « q » représente un nombre entier de 1 à 4, et « p » représente un nombre entier de « 0 » (zéro) à 12 ; lorsque « r » vaut 2 à 3, les atomes d'azote ne sont pas directement couplés les uns aux autres.

6. Agent absorbant de gaz acide selon la revendication 5,
dans lequel les alcanolamines sont au moins un type sélectionné dans un groupe constitué par le 2-(isopropylamino)éthanol, le 2-(éthylamino)éthanol et le 2-amino-2-méthyl-1-propanol.

7. Agent absorbant de gaz acide selon la revendication 5 ou la revendication 6,
dans lequel le composé d'amine hétérocyclique comporte au moins un type sélectionné dans un groupe constitué par les pipérazines.

8. Agent absorbant de gaz acide selon la revendication 7,
dans lequel les pipérazines sont au moins un type sélectionné dans un groupe constitué par la pipérazine, la 2-méthylpipérazine, la 2,5-diméthylpipérazine et la 2,6-diméthylpipérazine.

9. Procédé d'élimination de gaz acide comprenant :
le fait d'amener un gaz contenant un gaz acide en contact avec l'agent absorbant de gaz acide selon l'une quelconque des revendications 1 à 8 pour éliminer le gaz acide du gaz contenant le gaz acide.

10. Dispositif d'élimination de gaz acide éliminant du gaz acide d'un gaz contenant le gaz acide, le dispositif comprenant :
une tour d'absorption contenant l'agent absorbant de gaz acide selon l'une quelconque des revendications 1 à 8 et amenant le gaz contenant le gaz acide en contact avec l'agent absorbant de gaz acide pour éliminer le gaz acide du gaz ; et
une tour de régénération configurée pour contenir l'agent absorbant de gaz acide ayant absorbé le gaz acide au niveau de la tour d'absorption de manière à régénérer l'agent absorbant de gaz acide pour le réutiliser au niveau de la tour d'absorption en éliminant le gaz acide de l'agent absorbant de gaz acide.
